# EUROPÄISCHE PATENTSCHRIFT

(11) **EP 1 074 782 B1**
(45) Veröffentlichungstag und Bekanntmachung des Hinweises auf die Patenterteilung: **14.05.2003**
(21) Anmeldenummer: 00114074.8
(22) Anmeldetag: 07.07.2000
(51) Int. Cl.: F16L 37/088

(54) **Steckverbinder für Druckleitungssysteme**
Plug-in connector for pressure pipe systems
Connecteur enfichable pour systèmes de conduites sous pression

(30) Priorität: 06.08.1999 DE 29913750 U
(43) Veröffentlichungstag der Anmeldung: 07.02.2001
(73) Patentinhaber: Voss Automotive GmbH, 51688 Wipperfürth (DE)
(72) Erfinder: Hagen, Harald, 51688 Wipperfürth (DE); Goller, Bernd, 51688 Wipperfürth (DE)
(74) Vertreter: Patentanwälte Dr. Solf & Zapf

(56) Entgegenhaltungen:
- EP-A- 0 005 865
- EP-A- 0 373 920
- DE-A- 3 341 029
- GB-A- 2 125 131

## Beschreibung

Die vorliegende Erfindung betrifft einen Steckverbinder für Druckleitungen, mit einem Steckerteil und einem lösbar in eine Öffnung eines Gehäuseteils einsetzbaren Einsatzteil, wobei das Steckerteil mit einem Steckerschaft dichtend in eine Durchgangsöffnung des Einsatzteils einsteckbar und in der eingesteckten Position über ein radialelastisch verformbares Halteringelement gegen Lösen formschlüssig arretierbar ist, und wobei das Halteringelement in einer inneren Ringkammer des Einsatzteils integriert unverlierbar angeordnet ist.

Ein derartiger Steckverbinder ist aus der GB-A-2 125 131 bekannt. Dabei ist das Einsatzteil mit einem Außengewinde in eine Gewindebohrung eines Tanks (Drucklufttanks) einschraubbar. Das Halteringelement ist als Halteklammer mit zwei federelastisch verbundenen und dadurch spreizbaren Federarmen ausgebildet und derart in einer Ringkammer des Einsatzteils untergebracht, dass zwar ein Lösen des eingesteckten und verriegelten Steckerteils durch Herausschrauben des Einsatzteils aus der Gewindebohrung möglich ist. Jedoch ist ein vollständiges Lösen des Steckerteils aus dem Einsatzteil sehr umständlich, weil die Federarme des Halteringelementes nur von der Seite her zum Spreizen erreichbar sind.

Die DE-A-33 41 029 beschreibt eine Steckverbindung, bei der ein Halteringelement dadurch unverlierbar mit einem Einsatzteil verbunden ist, dass das Halteringelement an einem zusätzlichen Abschlußring gehaltert ist, der mit dem Einsatzteil verrastet ist. Dabei liegt das Halteringelement axial vor der Stimseite des Einsatzteils und folglich nicht in einer inneren Ringkammer des Einsatzteils.

Die EP-A-0 373 920 beschreibt eine weitere Steckkupplung mit einem eine Steckeröffnung aufweisenden Aufnahmeteil, in dem in einer inneren Ringkammer ein Halteringelement angeordnet ist. Zum Lösen trägt das Steckerteil ein hülsenförmiges Löseelement, welches von der Einsteckseite her relativ zum Steckerteil zum Spreizen des Halteringelementes in das Aufnahmeteil einschiebbar ist.

Ein weiterer Steckverbinder ist aus der EP 0 005 865 B1 bekannt. Dabei ist zwischen dem in das Gehäuseteil eingesetzten, als Einschraubstück (Überwurfschraube) mit Außengewinde ausgebildeten Einsatzteil und einer Stufenfläche innerhalb des Gehäuseteils eine Ringkammer gebildet, in der das Halteringelement sitzt. Zum Lösen des Steckerteils wird das Einschraubstück zusammen mit dem arretierten Stecker herausgeschraubt, und anschließend kann auf der dann frei zugänglichen Stirnseite des Einschraubteils das Halteringelement vom Steckerschaft entfernt werden, um dann den Stecker ganz aus dem Einschraubteil herausziehen zu können. Diese bekannte Steckverbindung hat sich in der Praxis gut bewährt, allerdings könnte die Handhabung beim Montage- und Lösevorgang noch verbessert werden. Außerdem unterliegt das Halteringelement nach dem Lösen einer nicht geringen Verlustgefahr, weil es gänzlich vom Stecker entfernt werden muß und dann folglich ein loses Einzelteil darstellt.

Der vorliegenden Erfindung liegt die Aufgabe zugrunde, den bekannten Steckverbinder der eingangs beschriebenen Art so zu verbessern, dass bei geringer Verlustgefahr von Einzelteilen eine vereinfachte Handhabung vor allem bezüglich des Lösevorgangs erreicht wird.

Erfindungsgemäß wird dies dadurch erreicht, dass das Einsatzteil auf der in das Gehäuseteil einzusetzenden Stirnseite derart ausgebildet ist, und das Halteringelement zur einzusetzenden Stirnseite hin eine Konusfläche derart aufweist, dass mit einem hülsenförmig ausgebildeten Löseelement von der Stirnseite her zur Freigabe des Steckerteils das Halteringelement durch axialen Andruck über die Konusfläche spreizbar ist.

Dabei bildet das Einsatzteil mit dem integrierten, praktisch unverlierbar vormontierten Halteringelement eine Einheit , wodurch das Halteringelement nur einer geringen Verlustgefahr unterliegt. Zudem werden die Montage und Demontage vereinfacht, weil jeweils nur ein Teil, das Einsatzteil, betätigt zu werden braucht; ein gesondertes Einlegen des Halteringelementes während des Montagevorgangs im Sinne der EP 0 005 865 B1 entfällt, weil das Halteringelement schon integriert bzw. vormontiert im Einsatzteil angeordnet ist. Das Steckerteil ist - nach wie vor - durch einfaches Einstecken zu kuppeln, wobei das Halteringelement in eine Stecker-Außenringnut formschlüssig einrastet. Das Lösen erfolgt dann zunächst ebenfalls durch Lösen des Einsatzteils vom Gehäuseteil. Darüber hinaus sind erfindungsgemäß Lösemittel vorgesehen, um dann das Steckerteil auch noch gänzlich aus dem Einsatzteil lösen zu können, wobei aber das Halteringelement im Einsatzteil verbleiben kann. Dazu ist vorgesehen, dass das Einsatzteil und das Halteringelement auf der in das Gehäuseteil einzusetzenden Stirnseite derart ausgebildet sind, dass - nach dem Entfernen des Einsatzteils mit dem gesteckten Steckerteil aus der Öffnung des Gehäuseteils - das Halteringelement mittels eines Lösewerkzeuges von der Stirnseite her zur Freigabe des Steckerteils elastisch spreizbar ist. Dazu weist das Halteringelement auf seiner in Einsetzrichtung des Einsatzteils weisenden Seite eine Konusfläche derart auf, dass mit dem vorzugsweise hülsenförmig ausgebildeten Lösewerkzeug durch axialen Andruck über die Konusfläche das Halteringelement radial gespreizt wird.

Weitere vorteilhafte Ausgestaltungsmerkmale sind in den Unteransprüchen sowie der folgenden Beschreibung enthalten.

Anhand von mehreren, in der Zeichnung veranschaulichten, bevorzugten Ausführungsbeispielen soll die Erfindung nun genauer erläutert werden. Dabei zeigen:
- Fig. 1: einen Längsschnitt durch einen erfindungsgemäßen Steckverbinder in einer ersten Ausführungsform,
- Fig. 2: eine perspektivische Explosionsdarstellung der Einzelteile des Steckverbinders in der Ausführung nach Fig. 1,
- Fig. 3: eine etwas vergrößerte Ansicht des Halteringelementes in Pfeilrichtung III gemäß Fig. 2,
- Fig. 4: eine Ansicht des Halteringelementes in Pfeilrichtung IV gemäß Fig. 3,
- Fig. 5: eine weitere Ansicht des Halteringelementes in Pfeilrichtung V gemäß Fig. 4,
- Fig. 6: eine vergrößerte Schnittansicht des Halteringelementes in der Ebene VI-VI gemäß Fig. 5,
- Fig. 7: eine weitere Perspektivansicht des Halteringelementes aus anderer Blickrichtung im Vergleich zu Fig. 2,
- Fig. 8: eine zweite Ausführungsform des erfindungsgemäßen Steckverbinders in einer Schnittdarstellung analog zu Fig. 1,
- Fig. 9: eine perspektivische Explosionsdarstellung der Ausführungsform nach Fig. 8,
- Fig. 10: eine dritte Ausführungsform des Steckverbinders im Schnitt analog zu Fig. 1 bzw. 8 und
- Fig. 11: eine weitere Schnittdarstellung des Steckverbinders, hier beispielhaft in der Ausführung nach Fig. 8 mit zusätzlicher Darstellung eines Lösewerkzeugs zur Erläuterung des Lösevorgangs.

In den verschiedenen Zeichnungsfiguren sind gleiche Teile stets mit den gleichen Bezugszeichen versehen und werden daher in der Regel jeweils nur einmal beschrieben.

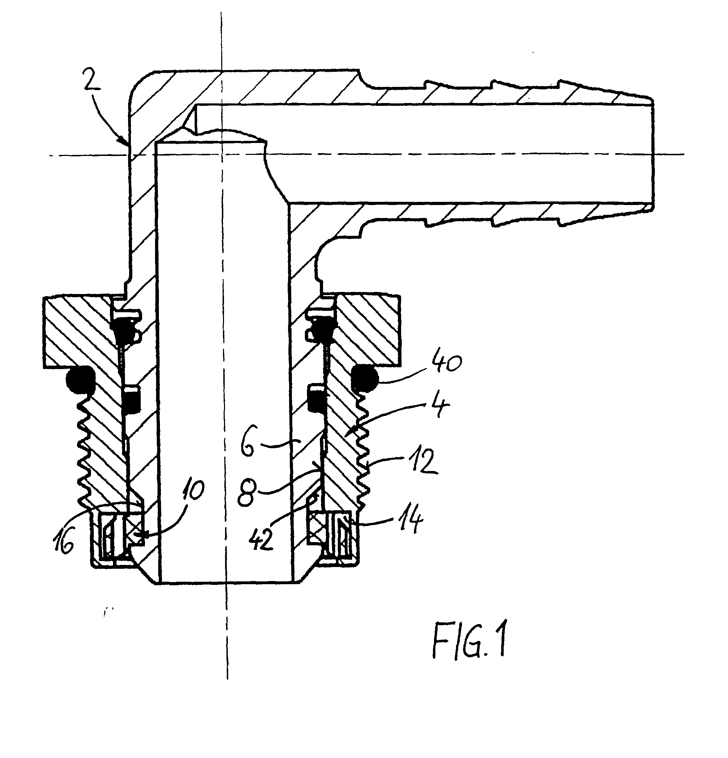

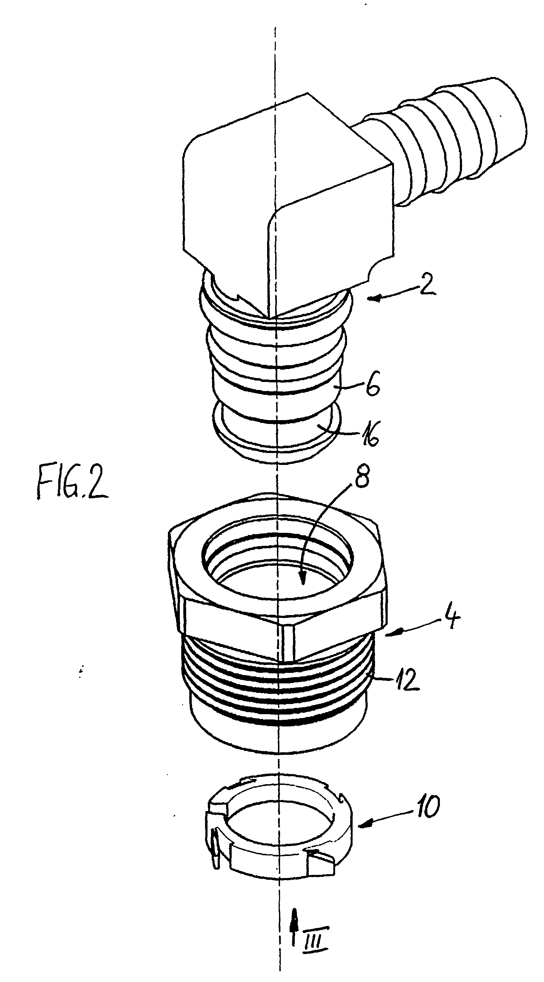

Wie sich zunächst aus Fig. 1 und 2 ergibt, besteht ein erfindungsgemäßer Steckverbinder im wesentlichen aus einem Steckerteil 2 und einem Einsatzteil 4, wobei das Steckerteil 2 mit einem Steckerschaft 6 umfangsgemäß dichtend in eine Durchgangsöffnung 8 des Einsatzteils 4 einsteckbar und in der eingesteckten Position über ein radialelastisch verformbares Halteringelement 10 gegen Lösen, d. h. gegen Herausziehen, formschlüssig arretierbar ist.

In den dargestellten Ausführungsformen weist das Einsatzteil 4 ein Außengewinde 12 auf, so daß es als Einschraubteil bzw. Überwurfschraube lösbar in eine entsprechende Gewindebohrung eines nicht dargestellten, praktisch beliebigen Gehäuseteils beispielsweise eines Druckaggregates einschraubbar ist.

Alternativ könnte das Einsatzteil 4 aber auch über andere geeignete Verbindungsmittel mit dem Gehäuseteil lösbar verbunden werden, beispielsweise über eine Bajonettverbindung oder dergleichen.

Erfindungsgemäß ist das Halteringelement 10 integrierter Bestandteil des Einsatzteils 4. Dies bedeutet, daß das Halteringelement 10 in einer inneren Ringkammer 14 des Einsatzteils 4 integriert unverlierbar vormontiert angeordnet ist.

Das Steckerteil 2 weist an seinem Steckerschaft 6 eine äußere Ringnut 16 auf, in die beim Einstecken das Halteringelement 10 formschlüssig rastend eingreift. Dieser Zustand ist in Fig. 1 veranschaulicht.

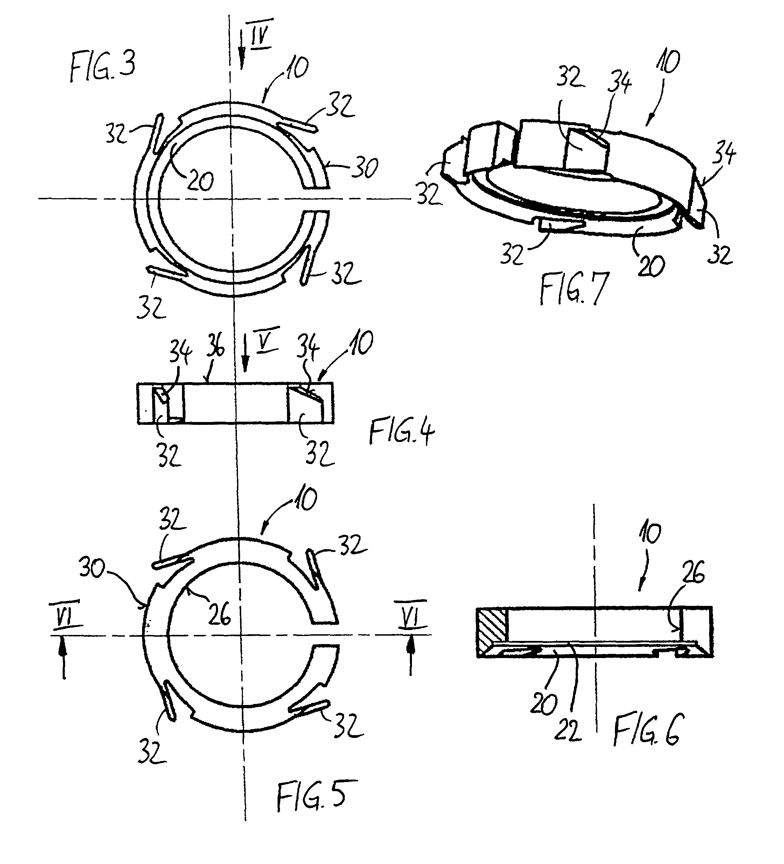

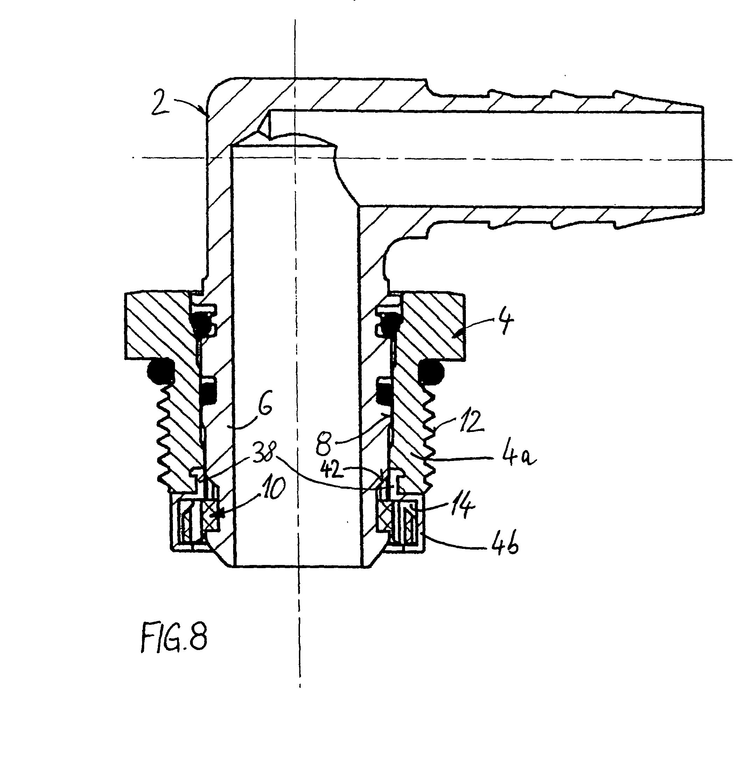

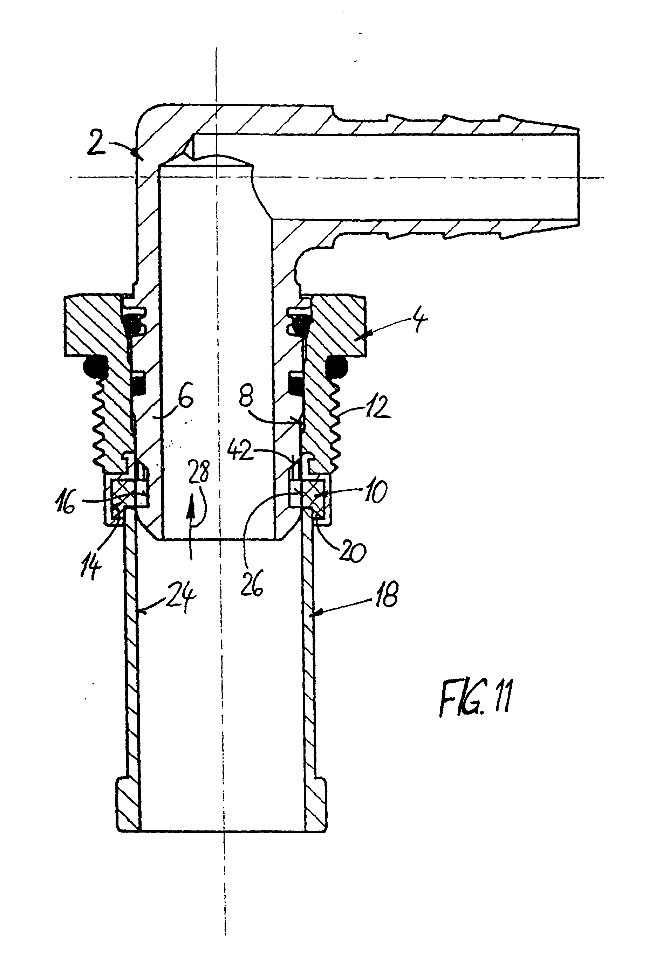

Um nachfolgend das Steckerteil 2 wieder von dem Einsatzteil 4 trennen, d. h. den Steckerschaft 6 aus der Durchgangsöffnung 8 herausziehen zu können, ist erfindungsgemäß vorgesehen, daß das Einsatzteil 4 und das Halteringelement 10 auf der in das Gehäuseteil einzusetzenden Stirnseite derart ausgebildet sind, daß das Halteringelement 10 durch eine stirnseite Öffnung des Einsatzteils 4 hindurch mittels eines gesonderten Löseelementes 18 - siehe hierzu Fig. 11 - zur Freigabe des Steckerteils 2 radialelastisch spreizbar ist. Dabei ist es vorteilhaft, wenn das Halteringelement 10 als Kreisringkörper mit einem im wesentlichen rechteckigen Ringquerschnitt (vgl. Fig. 6) ausgebildet ist und zum Erreichen seiner Radialelastizität an einer Stelle seines Umfangs durchgehend geschlitzt ausgebildet ist. Wie sich aus den Ansichten in Fig. 3 und 5 ergibt, weist das Halteringelement 10 einen für seine Haltefunktion wirksamen Umschlingungswinkel von nahezu 360° auf. Dadurch kann es sehr hohe Haltekräfte aufnehmen. Für die erwähnte Lösefunktion weist das Halteringelement 10 zur einzusetzenden Stirnseite des Einsatzteils 4 hin eine Konusfläche 20 (siehe insbesondere auch Fig. 3, 6, und 7) derart auf, daß mit dem - bevorzugt hülsenförmig ausgebildeten - Löseelement 18 gemäß Fig. 11 durch axialen Andruck über die Konusfläche 20 das Halteringelement 10 spreizbar ist, und zwar so weit, bis das Halteringelement 10 gänzlich aus der Stecker-Ringnut 16 freikommt und damit das Steckerteil 2 freigibt.

In weiterer vorteilhafter Ausgestaltung schließt sich an die Konusfläche 20 radial nach innen eine kurze zylindrische Innenfläche 22 (siehe insbesondere Fig. 6) derart an, daß das hülsenförmige Löseelement 18 mit seinem Endabschnitt in der gespreizten Stellung des Halteringelementes 10 kraftschlüssig in der Innenfläche 22 sitzt. Das Löseelement 18 wird somit selbsthemmend in dem Halteringelement 10 gehalten, was nachfolgend ein problemloses Herausziehen des Steckerschaftes 6 ermöglicht (siehe insbesondere Fig. 11). Dabei ist das Löseelement 18 bezüglich seines Außen- und Innendurchmessers so an das Halteringelement 10 angepaßt, daß in der in Fig. 11 dargestellten Lösestellung die zylindrische Innenfläche 24 des Löseelementes 18 in axialer Richtung etwa fluchtend in den Innenumfang 26 des Halteringelementes 10 übergeht. Der Stekkerschaft 6 läßt sich dadurch problemlos in Pfeilrichtung 28 herausziehen.

Aufgrund des oben bereits erwähnten, großen Umschlingungswinkels des Halteringelementes 10 von nahezu 360° ist zum Lösen eine relativ weite Spreizung erforderlich. Deshalb muß das Halteringelement 10 mit entsprechend großem radialen Bewegungsspiel innerhalb der Ringkammer 14 angeordnet sein. Deshalb ist es zweckmäßig, Zentriermittel vorzusehen, über die das Halteringelement 10 selbstzentrierend bezogen auf die Steckmittelachse in der Ringkammer 14 sitzt. In den dargestellten, bevorzugten Ausführungsbeispielen weist das Halteringelement 10 auf seinem Außenumfang 30 als Zentriermittel mehrere, wie dargestellt beispielsweise vier, insbesondere etwa tangential ausgerichtete, elastisch verformbare Zentrierarme 32 auf (siehe insbesondere Fig. 3 und 5). Diese Zentrierarme 32 stützen sich in der Ringkammer 14 ab.

Es ist weiterhin vorteilhaft, wenn zum selbsttätigen elastischen Verengen des Halteringelementes 10 beim axialen Einsetzen in die innere Ringkammer 14 des Einsatzteils 4 spezielle Einsetzmittel vorgesehen sind. Bevorzugt sind dazu die Zentrierarme 32 auf der axial in Einsetzrichtung weisenden Seite nach außen in Richtung ihrer freien Enden abfallend abgeschrägt ausgebildet. Gemäß Fig. 4 ergeben sich dadurch schräge Kanten 34. Vorzugsweise enden diese schrägen Kanten 34 auf der mit dem Halteringelement 10 verbundenen Seite der Zentrierarme 32 schon etwas axial vor der stirnseitigen Ringendfläche 36 (siehe Fig. 4), so daß sich ein kurzer zylindrischer Ringabschnitt ergibt, der zum Ansetzen des Halteringelementes 10 unmittelbar vor dem axialen Hineindrücken in die Ringkammer 14 dient.

Aufgrund der beschriebenen Ausgestaltung sind vorteilhafterweise auch Mittel zur Vermeidung einer falsch orientierten Montage des Halteringelementes 10 gebildet. Aufgrund der schrägen Kanten 34 der Zentrierarme 32 kann das Halteringelement 10 nur in der korrekten Orientierung montiert werden, da auf der axial gegenüberliegenden Seite derartige Schrägkanten fehlen.

Bei der Ausführungsform nach Fig. 1 und 2 ist das Einsatzteil 4 einstückig und insbesondere aus Metall, beispielsweise Messing, ausgebildet.

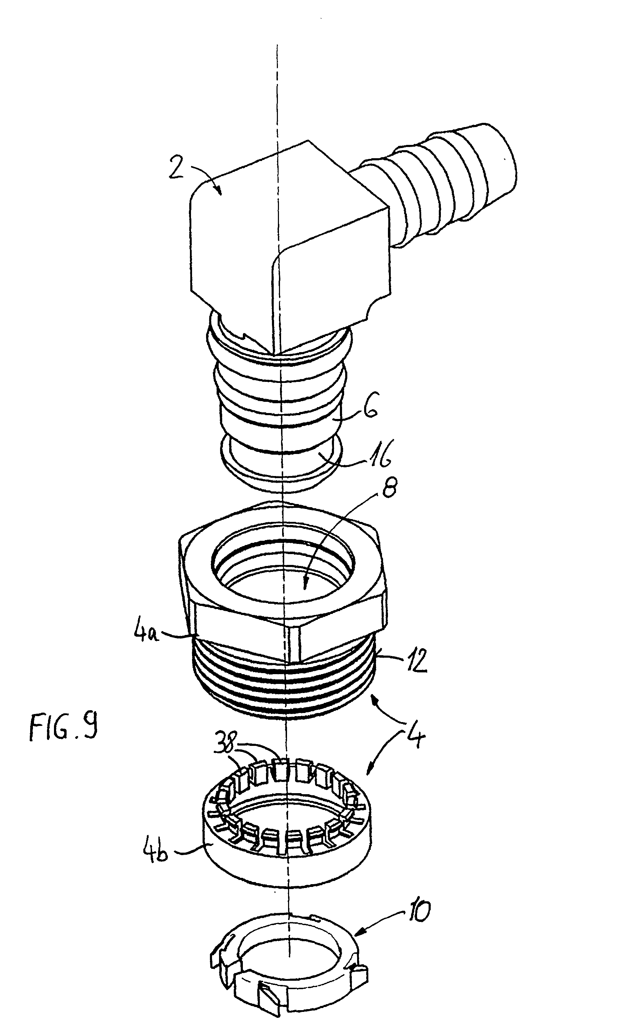

Im Gegensatz dazu ist bei der zweiten Ausführungsform nach Fig. 8 und 9 vorgesehen, daß das Einsatzteil 4 zweiteilig aus einem Basisteil 4a und einem die innere Ringkammer 14 für das Halteringelement 10 aufweisenden Aufnahmeteil 4b ausgeführt ist. Vorteilhafterweise ist hierbei das Aufnahmeteil 4b mit dem Basisteil 4a über eine formschlüssige Rastverbindung verbunden. Dabei ist zudem vorteilhaft, wenn dann die Rastverbindung durch den eingesteckten Steckerschaft 6 zusätzlich gegen Lösen blockiert wird. Bei dem in Fig. 8 und 9 veranschaulichten Ausführungsbeispiel wird dies dadurch erreicht, daß das Aufnahmeteil 4b mit einer Vielzahl von über den Umfang verteilt angeordneten, axialen Rastarmen 38 in das Basisteil 4a eingreift, wobei jeder Rastarm mit einer radial nach außen ragenden Rastnase formschlüssig hinter eine Rastkante im Basisteil 4a greift. Bei gestecktem Steckerschaft 6 ist dadurch eine Bewegung der Rastarme 38 radial nach innen ausgeschlossen. Anhand der Fig. 8 läßt sich dies gut nachvollziehen.

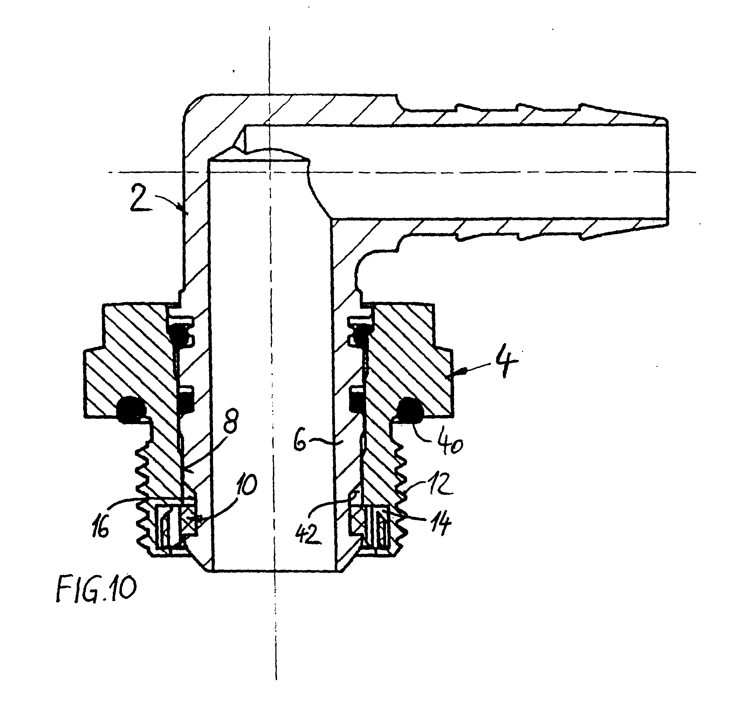

Wie bereits erwähnt wurde, läßt sich das Einsatzteil 4 in Fig. 10 mit seinem vorzugsweise bis zur Unterkante des Einsatzteils 4 reichenden Außengewinde 12 in eine Gewindebohrung (Normbohrung) eines nicht dargestellten Gehäuseteils einschrauben. Durch diese Variation kann die notwendige Einschraubtiefe auf die minimale Einschraubtiefe einer Normbohrung adaptiert werden. Dazu weist das Einsatzteil 4 zur Abdichtung gegen das Gehäuseteil eine Dichtung 40 auf. Bei den Ausführungen nach Fig. 1 bis 9 handelt es sich hauptsächlich um eine Radialdichtung, während bei der Ausführungsvariante nach Fig. 10 die Dichtung 40 als Axialdichtung ausgeführt ist. Dabei ist es vorteilhaft, dass sich an den Außengewindeabschnitt 12 ein Flanschabschnitt mit im Vergleich zu Fig. 1 bis 9 größerer radialer Weite anschließt. Dabei kann sowohl bei der Variante in Fig. 1 als auch bei der Variante in Fig. 10 eine radiale oder axiale Abdichtung eingesetzt werden.

Es sei noch erwähnt, dass die Ringnut 16 des Steckerschaftes 6 auf ihrer von dem freien Schaftende entfernt liegenden Seite eine obere Flanke aufweist, die bevorzugt als Schräge 42 ausgebildet ist, so dass im Falle einer Schlagbelastung in Einsteckrichtung auf das Steckerteil 2 das Halteringelement 10 über die Schräge 42 radialelastisch gespreizt wird und dann wieder zurückfedert. Dadurch werden Beschädigungen des Halteringelementes 10 bei solchen Schlagbelastungen vermieden. Weiterhin ist vorgesehen, dass bei der zweiteiligen Ausführung des Einsatzteils 4 nach Fig. 8 und 9 das Basisteil 4a bevorzugt aus Metall, insbesondere Messing, besteht, während dann das Aufnahmeteil 4b vorzugsweise aus einem geeigneten Kunststoff hergestellt wird. Das Halteringelement 10 besteht ebenfalls bevorzugt aus Kunststoff.

## Patentansprüche

1. Steckverbinder für Druckleitungen, mit einem Steckerteil (2) und einem lösbar in eine Öffnung eines Gehäuseteils einsetzbaren Einsatzeil (4), wobei das Steckerteil (2) mit einem Steckerschaft (6) dichtend in eine Durchgangsöffnung (8) des Einsatzteils (4) einsteckbar und in der eingesteckten Position über ein radialelastisch verformbares Halteringelement (10) gegen Lösen formschlüssig arretierbar ist, und wobei das Halteringelement (10) in einer inneren Ringkammer (14) des Einsatzteils (4) integriert unverlierbar angeordnet ist,
**dadurch gekennzeichnet, dass** das Einsatzteil (4) auf der in das Gehäuseteil einzusetzenden Stirnseite derart ausgebildet ist und das Halteringelement (10) zur einzusetzenden Stirnseite hin eine Konusfläche (20) derart aufweist, dass das Halteringelement (10) mit einem hülsenförmig ausgebildeten Löseelement (18) von der Stirnseite her zur Freigabe des Steckerteils (2) durch axialen Andruck über die Konusfläche (20) spreizbar ist.

2. Steckverbinder nach Anspruch 1,
**dadurch gekennzeichnet**, dassdas Halteringelement (10) als Kreisringkörper mit einem im Wesentlichen rechteckigen Ringquerschnitt ausgebildet ist und an einer Stelle seines Umfangs durchgehend geschlitzt und dadurch radial elastisch verformbar ausgebildet ist.

3. Steckverbinder nach Anspruch 1 oder 2,
**dadurch gekennzeichnet, dass** sich an die Konusfläche (20) des Halteringelementes (10) radial nach innen eine zylindrische Innenfläche (22) derart anschließt, dass das hülsenförmige Löseelement (18) mit einem Endabschnitt in der gespreizten Stellung des Halteringelementes (10) kraftschlüssig in der Innenfläche (22) sitzt.

4. Steckverbinder nach einem der Ansprüche 1 bis 3,
**dadurch gekennzeichnet, dass** das Halteringelement (10) über Zentriermittel selbstzentrierend in der Ringkammer (14) sitzt.

5. Steckverbinder nach Anspruch 4,
**dadurch gekennzeichnet**, dassdas Halteringelement (10) auf seinem Außenumfang (30) als Zentriermittel mehrere, insbesondere etwa tangential ausgerichtete, elastische Zentrierarme (32) aufweist.

6. Steckverbinder nach einem der Ansprüche 1 bis 5,
**gekennzeichnet durch** Einsetzmittel zum selbsttätigen elastischen Verengen des Halteringelementes (10) beim axialen Einsetzten in die innere Ringkammer (14) des Einsatzteils (4).

7. Steckverbindung nach Anspruch 5 oder 6,
**dadurch gekennzeichnet, dass** die Zentrierarme (32) auf der axial in Einsetzrichtung weisenden Seite nach außen abfallend abgeschrägt ausgebildet sind.

8. Steckverbindung nach einem der Ansprüche 1 bis 7,
**gekennzeichnet durch** Mittel zur Vermeidung einer falsch orientierten Montage des Halteringelementes (10).

9. Steckverbindung nach einem der Ansprüche 1 bis 8,
**dadurch gekennzeichnet, dass** das Einsatzteil (4) einstückig und insbesondere aus Metall, vorzugsweise Messing, ausgebildet ist.

10. Steckverbindung nach einem der Ansprüche 1 bis 8,
**dadurch gekennzeichnet, dass** das Einsatzteil (4) zweiteilig aus einem Basisteil (4a) und einem die innere Ringkammer (14) für das Halteringelement (10) aufweisenden Aufnahmeteil (4b) ausgeführt ist.

11. Steckverbindung nach Anspruch 10,
**dadurch gekennzeichnet, dass** das Aufnahmeteil (4b) mit dem Basisteil (4a) über eine Rastverbindung verbunden ist, wobei vorzugsweise die Rastverbindung durch den eingesteckten Steckerschaft (6) gegen Lösen blockiert wird.

12. Steckverbinder nach einem der Ansprüche 1 bis 11,
**dadurch gekennzeichnet, dass** das Einsatzteil (4) ein Außengewinde (12) aufweist.

13. Steckverbinder nach einem der Ansprüche 1 bis 12,
**dadurch gekennzeichnet, dass** das Einsatzteil (4) zur Abdichtung gegen das Gehäuseteil eine axial und/oder radial wirkende Dichtung (40) aufweist.

14. Steckverbinder nach einem der Ansprüche 1 bis 13,
**dadurch gekennzeichnet, dass** das Halteringelement (10) und/oder das Aufnahmeteil (4b) aus Kunststoff bestehen/besteht.

15. Steckverbinder nach einem der Ansprüche 1 bis 14,
**dadurch gekennzeichnet**, dassder Steckerschaft (6) des Steckerteils (2) eine äußere Ringnut (16) zum Eingreifen des Halteringelementes (10) aufweist, wobei eine obere Flanke der Ringnut (16) derart als Schräge (42) ausgebildet ist, dass bei einer Schlagbelastung in Einsteckrichtung auf das Steckerteil (2) das Halteringelement (10) zur Vermeidung von Beschädigungen radial elastisch nachgibt und zurückfedert.

## Claims

1. Plug-in connector for pressure lines, having a plug part (2) and an insert part (4) that can be inserted detachably into an opening in a housing part, it being possible for the plug part (2) to be plugged with a plug shank (6) in a sealing manner into a through opening (8) in the insert part (4) and, in the plugged-in position, locked with a form fit against release via a radially elastically deformable retaining ring element (10), and the retaining ring element (10) being captively arranged integrated in an inner annular chamber (14) in the insert part (4), **characterized in that** the insert part (4) is formed on the end to be inserted into the housing part, and the retaining ring element (10) has a conical face (20) towards the end to be inserted, both in such a way that the retaining ring element (10) can be spread from the end by a sleeve-like release element (18), in order to release the plug part (2), by means of axial pressure via the conical face (20).

2. Plug-in connector according to Claim 1, **characterized in that** the retaining ring element (10) is designed as a circular ring element with a substantially rectangular ring cross section and, at one point on its circumference, is slit through and as a result is radially elastically deformable.

3. Plug-in connector according to Claim 1 or 2, **characterized in that** the conical face (20) of the retaining ring element (10) is adjoined radially on the inside by a cylindrical inner face (22) in such a way that the sleeve-like release element (18) is seated with an end section with a form fit in the inner face (22) in the spread position of the retaining ring element (10).

4. Plug-in connector according to one of Claims 1 to 3, **characterized in that** the retaining ring element (10) is seated in the annular chamber (14) so as to be self-centred via centring means.

5. Plug-in connector according to Claim 4, **characterized in that** the retaining ring element (10) has on its outer circumference (30), as centring means, a plurality of elastic centring arms (32), in particular aligned approximately tangentially.

6. Plug-in connector according to one of claims 1 to 5, **characterized by** insertion means for the automatic, elastic narrowing of the retaining ring element (10) as it is inserted axially into the inner annular chamber (14) in the insert part (4).

7. Plug-in connector according to Claim 5 or 6, **characterized in that** on the side which points axially in the insertion direction, the centring arms (32) are chamfered falling towards the outside.

8. Plug-in connector according to one of Claims 1 to 7, **characterized by** means for avoiding wrongly oriented fitting of the retaining ring element (10).

9. Plug-in connecter according to one of Claims 1 to 8, **characterized in that** the insert part (4) is formed in one piece and in particular from metal, preferably brass.

10. Plug-in connector according to one of Claims 1 to 8, **characterized in that** the insert part (4) is designed in two parts from a base part (4a) and a receiving part (4b) having the inner annular chamber (14) for the retaining ring element (10).

11. Plug-in connector according to Claim 10, **characterized in that** the receiving part (4b) is connected to the base part (4a) via a latching connection, the latching connection preferably being blocked by the inserted plug shank (6) against release.

12. Plug-in connector according to one of Claims 1 to 11, **characterized in that** the insert part (4) has an external thread (12).

13. Plug-in connector according to one of Claims 1 to 12, **characterized in that** the insert part (4) has a seal (40) that acts axially and/or radially in order to seal with respect to the housing part.

14. Plug-in connector according to one of Claims 1 to 13, **characterized in that** the retaining ring element (10) and/or the receiving part (4b) consist/consists of plastic.

15. Plug-in connector according to one of Claims 1 to 14, **characterized in that** the plug shank (6) of the plug part (2) has an external annular groove (16) for the engagement of the retaining ring element (10), an upper flank of the annular groove (16) being formed as a bevel (42) in such a way that, in the event of an impact loading in the plug-in direction on the plug part (2), the retaining ring element (10) gives way and springs back radially and elastically in order to avoid damage.

## Revendications

1. Raccord emboîtable pour tuyauteries sous pression, avec une partie à emboîter (2) et une pièce d'insertion (4) pouvant être insérée de manière séparable dans une ouverture d'une partie logement, la partie à emboîter (2) pouvant être emboîtée avec un corps d'emboîtement (6) de manière étanche dans une ouverture de passage (8) de la pièce d'insertion (4) et être bloquée dans la position d'emboîtement de manière solidaire avec correspondance de forme pour éviter la séparation par l'intermédiaire d'un élément d'anneau de retenue (10) déformable de manière élastique dans le sens radial, et l'élément d'anneau de retenue (10) étant disposé de manière imperdable de manière intégrée dans une chambre annulaire (14) de la pièce d'insertion (4), **caractérisé en ce que** la pièce d'insertion (4) est formée du côté frontal à insérer dans la partie logement et **en ce que** l'élément de retenue (10) présente, vers le côté frontal à insérer, une surface conique (20) de façon que l'élément d'anneau de retenue (10) avec un élément de séparation (18) en forme de douille peut être écarté à partir de la surface frontale pour libérer la partie à emboîter (2) par pression axiale sur la surface conique (20).

2. Raccord à emboîtement selon la revendication 1, **caractérisé en ce que** l'élément d'anneau de retenue (10) est conçu comme un corps annulaire circulaire avec une section annulaire essentiellement carrée et est fendu en continu en un endroit de sa périphérie et est formé par là même de manière déformable élastiquement dans le sens radial.

3. Raccord à emboîtement selon la revendication 1 ou 2, **caractérisé en ce qu'**une surface intérieure cylindrique (22) fait suite à la surface conique (20) de l'élément d'anneau de retenue (10) dans le sens radial vers l'intérieur, de façon que l'élément de séparation en forme de douille (18)est logé avec un segment d'extrémité dans la position écartée de l'élément d'anneau de retenue (10) de manière solidaire par une liaison dynamique dans la surface intérieure (22).

4. Raccord à emboîtement selon l'une quelconque des revendications 1 à 3, **caractérisé en ce que** l'élément d'anneau de retenue (10) est logé dans la chambre annulaire (14) par l'intermédiaire de moyens de centrage à centrage automatique.

5. Raccord à emboîtement selon la revendication 4, **caractérisé en ce que** l'élément d'anneau de retenue (10) présente sur son pourtour extérieur (30) comme moyens de centrage, plusieurs bras de centrage (32) élastiques, en particulier orientés à peu près tangentiellement.

6. Raccord à emboîtement selon l'une quelconque des revendications 1 à 5, **caractérisé par** des moyens d'insertion pour rétrécir automatiquement de manière élastique l'élément d'anneau de retenue (10) lors de l'insertion axiale dans la chambre annulaire intérieure (14) de la pièce d'insertion (4).

7. Raccord à emboîtement selon la revendication 5 ou 6, **caractérisé en ce que** les bras de centrage (32) ont une forme en biseau tombant vers l'extérieur du côté regardant dans la direction d'insertion dans le sens axial.

8. Raccord à emboîtement selon l'une quelconque des revendications 1 à 7, **caractérisé par** des moyens pour éviter un montage mal orienté de l'élément d'anneau de retenue (10).

9. Raccord à emboîtement selon l'une quelconque des revendications 1 à 8, **caractérisé en ce que** la pièce d'insertion (4) est formée d'une seule pièce et en particulier en métal, de préférence en laiton.

10. Raccord à emboîtement selon l'une quelconque des revendications 1 à 8, **caractérisé en ce que** la pièce d'insertion (4) est réalisée en deux parties, une partie de base (4a) et une partie logement (4b) présentant la chambre annulaire intérieure (14) pour l'élément d'anneau de retenue (10).

11. Raccord à emboîtement selon la revendication 10, **caractérisé en ce que** la partie logement (4b) est reliée avec la partie de base (4a) par l'intermédiaire d'un assemblage à encliquetage qui est bloqué de préférence par le corps d'emboîtement (6) emboîté pour empêcher la séparation.

12. Raccord à emboîtement selon l'une quelconque des revendications 1 à 11, **caractérisé en ce que** la pièce d'insertion (4) présente une filet extérieur (12).

13. Raccord à emboîtement selon l'une des revendications 1 à 12, **caractérisé en ce que** la pièce d'insertion (4) présente une joint (40) agissant dans le sens axial et/ou radial pour assurer l'étanchéité contre la partie boîtier.

14. Raccord à emboîtement selon l'une des revendications 1 à 13, **caractérisé en ce que** l'élément d'anneau de retenue (10) et/ou la partie logement (4b) sont/est réalisée(s) en matière plastique.

15. Raccord à emboîtement selon l'une quelconque des revendications 1 à 14, **caractérisé en ce que** le corps d'emboîtement (6) de la partie à emboîter (2) présente une rainure annulaire extérieure (16) pour être entourée par l'élément d'anneau de retenue (10), un flanc supérieur de la rainure annulaire (16) étant conçu en biseau (42) de façon que en cas de charge par coup dans le sens de l'emboîtement sur la partie à emboîter (2), l'élément d'anneau de retenue (10) cède et revient élastiquement dans le sens radial pour éviter des dommages.
